# EUROPÄISCHE PATENTSCHRIFT

(11) **EP 0 564 895 B1**
(45) Veröffentlichungstag und Bekanntmachung des Hinweises auf die Patenterteilung: **09.10.1996**
(21) Anmeldenummer: 93104806.0
(22) Anmeldetag: 24.03.1993
(51) Int. Cl.: H05B 41/29, F42B 30/02

(54) **Elektronisches Vorschaltgerät für Niederdruck-Gas-Entladungslampen**
Electronic ballast for low pressure discharge lamps
Ballast électronique pour lampes à décharge basse-pression

(30) Priorität: 06.04.1992 CH 1117/92
(43) Veröffentlichungstag der Anmeldung: 13.10.1993
(73) Patentinhaber: STARKSTROM-ELEKTRONIK AG, CH-8957 Spreitenbach (CH)
(72) Erfinder: Kamber,Fredy, CH-5422 Oberehrendingen (CH)
(74) Vertreter: Fillinger, Peter, Dr.

(56) Entgegenhaltungen:
- EP-A- 0 439 240
- WO-A-90/11005

## Beschreibung

Die vorliegende Erfindung bezieht sich auf ein elektronisches Vorschaltgerät für eine Niederdruck-Gasentladungslampe gemäss dem Oberbegriff des Patentanspruchs 1.

Derartige Geräte sind handelsüblich und aus der EP-A-0 439 240 bekannt. Das letztgenannte Gerät enthält ein als Hochsetzsteller ausgebildetes elektronisches Oberschwingungsfilter, wobei das elektronische Oberschwingungsfilter eine Hochsetzstellerdrossel aufweist. Die Hochsetzstellerdrossel hat eine zusätzliche Hilfswicklung, welche bei eingeschaltetem Vorschaltgerät über eine Gleichrichterschaltung einen Kondensator, welcher der Steuerschaltung eine Speise-Gleichspannung liefert, ständig nachlädt. Um die Speise-Gleichspannung zu stabilisieren, ist dem Kondensator eine Zener-Diode parallelgeschaltet.

Diese bekannte Gleichspannungs-Speiseschaltung für die Steuerschaltung des Wechselrichters weist den hauptsächlichen Nachteil auf, dass sie zur Erzeugung der Speise-Gleichspannung einen dauernden und merklichen Stromfluss durch mehrere Halbleiterelemente und Widerstände unabhängig davon benötigt, wie gross der Anteil der für die in der Steuerschaltung erforderlichen Energie ist, was zu unerwünschten Verlusten und zu zusätzlicher Erwärmung führt. Zudem können die Steuerschaltung und damit der Wechselrichter auch dann im Betriebzustand sein, wenn die Entladungslampe defekt oder überhaupt nicht vorhanden ist, was wegen der entstehenden Ueberspannungen zu Schäden führen kann.

Aufgabe der vorliegenden Erfindung ist, ein elektronisches Vorschaltgerät der eingangs genannten Art zu schaffen, dessen Gleichspannungs-Speiseschaltung für die Steuerschaltung nur nach Massgabe der erforderlichen elektrischen Energie und nur dann wirksam ist, wenn eine funktionsfähige Entladungslampe an das Vorschaltgerät angeschlossen ist.

Zur Lösung dieser Aufgabe weist das elektronische Vorschaltgerät erfindungsgemäss die im kennzeichnenden Teil des Patentanspruchs 1 angeführten Merkmale auf.

Da das Stromerfassungselement vom Spannungsschwellenschalter jeweils kurzgeschlossen wird, wenn die Ladung des Speicherkondensators bzw. seine Spannung ausreichend sind, um die Speisespannung für die Steuerschaltung aufrecht zu erhalten, sind unnötige Verluste auf ein Minimum beschränkt. Da ferner vom Stromerfassungselement der tatsächliche Strom des Entladungskreises gemessen wird, ist sichergestellt, dass bei einem Defekt im Entladungskreis, insbesondere bei Defekt oder Fehlen der Entladungslampe, ein Betrieb der Steuerschaltung und damit des Wechselrichters verhindert ist.

Eine besonders vorteilhafte Ausführungsform mit einer Diode in Reihe zum zweiten Kondensator und einer weiteren Diode zwischen dem Spannungsschwellenschalter und dem Speicherkondensator ist im Anspruch 2 definiert. Gemäss Anspruch 4 kann der Spannungsschwellenschalter im wesentlichen aus zwei Transistoren und einer Zener-Diode bestehen.

Gemäss Anspruch 6 kann eine nach dem Einschalten des Vorschaltgeräts erforderliche, anfängliche Speisespannung für die Steuerschaltung mit Hilfe eines an einen netzseitigen Gleichrichter angeschlossenen, elektronischen Schalters erzeugt werden.

Ein Ausführungsbeispiel des Erfindungsgegenstands wird nachstehend anhand der Zeichnung erläutert. Es zeigen:
- Fig. 1: ein Prinzipschema des erfindungsgemässen Vorschaltgeräts;
- Fig. 2: ein Schaltungsschema von Einzelheiten des Vorschaltgeräts,
- Fig. 3: ein Diagramm des zeitlichen Verlaufs der Spannung U in Fig. 2.

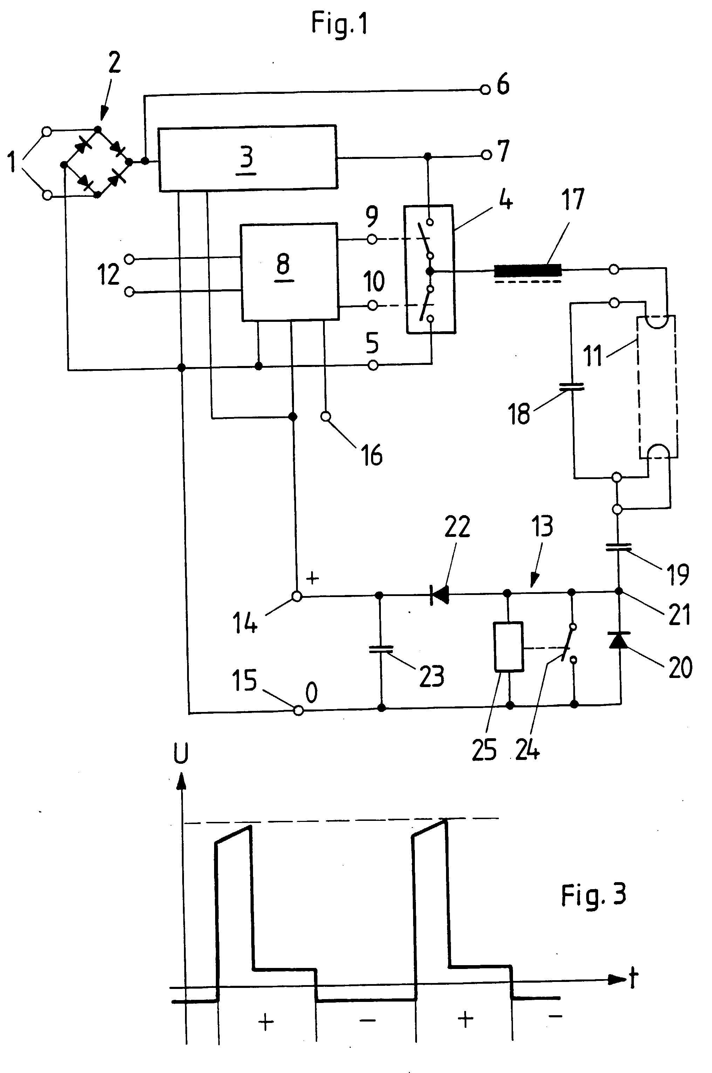

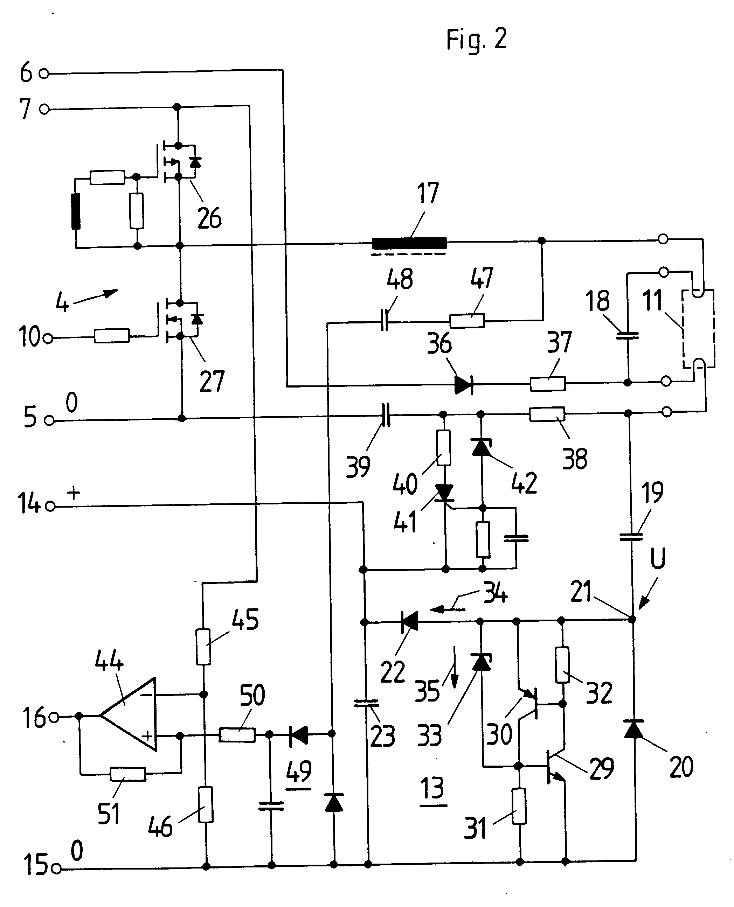

Gemäss Fig. 1 ist an Anschlussklemmen 1 für ein Wechselstrom- oder Gleichstromnetz ein Brückengleichrichter 2 angeschlossen. Im Fall des Betriebs aus einem Wechselstromnetz bildet der Brückengleichrichter eine Vollwelle; bei einem Gleichstromnetz dient der Brückengleichrichter als Verpolungsschutz. An den Brückengleichrichter 2 ist ein elektronischer Hochsetzsteller 3 angeschlossen. Dieser ermöglicht bekanntlich eine stufenlose Transformation der Eingangsgleichspannung von beispielsweise 230 V auf ein höheres Ausgangsgleichspannungsniveau von beispielsweise 400 V. Die Ausgangsgleichspannung des Hochsetzstellers speist einen nur schematisch dargestellten Wechselrichter 4, der zudem an eine gemeinsame Null-Leitung 0 angeschlossen ist, angedeutet durch eine Klemme 5. Die pulsierende Gleichspannung des Brückengleichrichters 2 und die Ausgangsgleichspannung des Hochsetzstellers 3 sind weiteren, erst in Fig. 2 erläuterten Schaltungsteilen zugeführt, was in Fig. 1 durch eine Klemme 6 bzw. eine Klemme 7 angedeutet ist.

Der Wechselrichter 4 schaltet bekanntlich periodisch und abwechselnd die Ausgangsgleichspannung des Hochsetzstellers 3 und die Nullspannung der Null-Leitung 0 auf seinen Ausgangsanschluss. Zur Steuerung seiner elektronischen Schaltstrecken dient ein elektronisches Steuergerät 8, dessen Verbindung mit dem Wechselrichter 4 durch Klemmen 9 und 10 angedeutet ist und anhand von Fig. 2 noch näher erläutert wird. Im vorliegenden Fall steuert die Steuerschaltung 8 den Wechselrichter 4 in mit Rechteckimpulsen einer höheren Frequenz von der Grössenordnung von 50 kHz. Um die Helligkeit einer vom Wechselrichter 4 gespeisten Niederdruck-Gasentladungslampe 11 zu verändern, sind diese Rechteckimpulse entweder bezüglich Impulsbreite oder Impulsfrequenz in der Steuerschaltung 8 veränderbar, was von aussen mittels einer Anschlussklemmen 12 zugeführten Steuerspannung erzielt werden kann. Die Steuerschaltung 8 benötigt eine Speise-Gleichspannung von beispielsweise 12 V, wozu gemäss Fig. 1 eine allgemein mit 13 bezeichnete Gleichspannungs-Speiseschaltung mit angedeuteten Anschlussklemmen 14 und 15 dient. Wie ersichtlich, speist die Gleichspannungs-Speiseschaltung 13 über die Anschlussklemmen 14, 15 auch elektronische Schaltungsteile des Hochsetzstellers 3. Eine in der Steuerschaltung 8 enthaltene, handelsübliche integrierte Schaltung weist einen Abschaltanschluss auf, auf welchen im ausführlicheren Schema der Fig. 2 Bezug genommen ist, und der in Fig. 1 durch eine Klemme 16 angedeutet ist.

Der an den Wechselrichter 4 angeschlossene Entladungskreis besteht aus einer in Reihe zur Entladungslampe 11 geschalteten Drossel 17, einem parallel zur Entladungslampe 11 geschalteten Kondensator 18 und grundsätzlich einem weiteren, in Reihe zur Entladungslampe 11 geschalteten Kondensator 19, welcher in Verbindung mit der gemeinsamen Null-Leitung 0 steht. Ueber den Kondensator 19 fliesst demnach der Gesamtstrom des genannten Entladungskreises, was in der nachfolgenden Weise zur Erzeugung der Speisegleichspannung für die Steuerschaltung 8 und auch den Hochsetzsteller 3 mittels der Gleichspannungs-Speiseschaltung 13 dient.

Der Reihenkondensator 19 ist nicht, wie üblich, direkt mit der Null-Leitung 0 angeschlossen, sondern über eine Reihendiode 20 mit dieser verbunden. Die Diode 20 ist derart angeordnet, dass sie für einen negativen Strom durchlässig ist, einen positiven Strom jedoch sperrt. Im Verbindungspunkt 21 des Kondensators 19 mit der Diode 20 tritt demnach für jede positive Halbperiode des Stroms im Entladungskreis eine positive Spannung auf, die über eine Diode 22 einen Kondensator 23 auflädt. Die Diode 22 verhindert, dass sich während den negativen Halbperioden des Stroms im Entladungskreis der Kondensator 23 bei leitender Reihendiode 20 wieder entlädt.

Um nun zu erreichen, dass sich der an die Gleichspannungs-Speiseklemme 14 angeschlossene Kondensator 23 auf einen festen Spannungswert auflädt und gleichzeitig im Verbindungspunkt 21 dem Strom in Entladungskreis nur so viel elektrische Energie entnommen wird, als für die Aufrechterhaltung einer konstanten Spannung am Kondensator 23 unter Berücksichtigung des bei dieser Spannung an die Steuerschaltung 8 und den Hochsetzsteller 3 gelieferten Speisestroms erforderlich ist, ist der Reihendiode 20 ein elektronischer Schalter 24 parallelgeschaltet. Der Schalter 24 wird durch ein ebenfalls parallel zur Reihendiode 20 geschaltetes Steuerglied 25 elektronisch beeinflusst, wobei das Steuerglied 25 in jeder positiven Halbperiode dann anspricht und den Schalter 24 schliesst, wenn die positive Spannung im Verbindungspunkt 21 einen bestimmten Wert erreicht. Bei geschlossenem Schalter 24 fliesst der Strom des Entladungskreises direkt zur Null-Leitung O, so dass eine weitere Aufladung des Kondensators 23 unterbleibt. An der Speiseklemme 14 liegt demnach eine konstante, geglättete Gleichspannung vor, zu deren Erzeugung zufolge der Anordnung des Schalters 24 nur sehr geringe Verluste entstehen. Zudem ist ersichtlich, dass bei defekter oder fehlender Entladungslampe 11 oder bei anderen Störungen des Stromflusses im Entladungskreis, beispielsweise bei einem Kurzschluss der Drossel 17, die Erzeugung einer Speise-Gleichspannung an der Klemme 14 verhindert ist und damit der Hochsetzsteller 3, die Steuerschaltung 8 und der Wechselrichter 4 folgerichtig nicht in einen aktiven Zustand gelangen können.

In Fig. 2 ist eine praktische Ausführungsform eines Teils des elektronischen Vorschaltgeräts sowie einiger zusätzlicher Schaltungsteile näher dargestellt. Hierbei sind die verschiedenen Verbindungsklemmen gleich bezeichnet wie in Fig. 1. Demnach sind im Entladungskreis an den Ausgang des Wechselrichters 4 in Reihe zur Entladungslampe 11 die Drossel 17 geschaltet, parallel zur Entladungslampe 11 der Kondensator 18, und weiter in Reihe zur Entladungslampe 11 und zu ihrem Parallelkondensator 18 der Kondensator 19 und die Diode 20.

In bekannter Weise weist der Wechselrichter 4 als elektronische Schaltelemente zwei MOSFET-Transistoren 26 und 27. Während der Transistor 27 von der Steuerschaltung 8 über den Anschluss 10 direkt gesteuert wird, erfolgt die Steuerung des Transistors 26 wegen des in jeder Halbperiode hohen Spannungsniveau an seiner Source-Elektrode über einen Transformator, von welchem in Fig. 2 die Sekundärwicklung 28 dargestellt ist.

Die Gleichspannungs-Speiseschaltung 13 weist parallel zur Diode 20 die Schaltung eines npn-Transistors 29 und eines pnp-Transistors 30 auf, wobei jeweils der Kollektor des einen Transistors mit der Basis des anderen Transistors verbunden ist. Ferner sind die Basen beider Transistoren 29, 30 über je einen Widerstand 31, 32 mit der Null-Leitung 0 bzw. mit der Leitung des Verbindungspunktes 21 verbunden. Schliesslich ist ist eine Zener-Diode 33 zwischen die Leitung des Verbindungspunktes 21 und die Basis des Transistors 29 geschaltet.

Wie bereits anhand der Fig. 1 erläutert, liegt in der positiven Halbperiode des Stroms im Entladungskreis an der Diode 20 und damit im Verbindungspunkt 21 eine positive Spannung, welche über die Diode 22 den Kondensator 23 auflädt, also einen zeitlich ansteigenden Verlauf hat. Hierbei ist zu bemerken, dass der Hauptanteil des Stroms gemäss Pfeil 34 zum Kondensator fliesst und nur ein verhältnismässig kleiner Anteil gemäss Pfeil 35 durch die Transistoren 29, 30, durch die Zener-Diode 33 und durch die Widerstände 31, 32.

Wenn diese positive Spannung die Schaltspannung der Zener-Diode erreicht, wird diese stromleitend, so dass am Widerstand 31 eine positive Spannung liegt, welche den zuvor gesperrten npn-Transistor 29 in den leitenden Zustand bringt. Der durch den Transistor 29 fliessende Strom bewirkt am Widerstand 32 einen Spannungsabfall, wodurch der zuvor gesperrte pnp-Transistor 30 ebenfalls leitend wird. Somit liegen parallel zur Diode 20 die beiden leitenden Kollektor-Emitterstrecken der Transistoren 29, 30, was die Diode 20 praktisch kurzschliesst. Die Spannung im Verbindungspunkt 21 sinkt deshalb praktisch auf null, das heisst wegen des Spannungsabfalls an den beiden Transistoren 29, 30 auf eine sehr geringe positive Spannung. Wie bereits erwähnt, sperrt die Diode 22 einen Rückfluss der Ladung des Kondensators 23.

In der nachfolgenden Halbperiode des Stroms im Entladungskreis fliesst dieser Strom vom Kondensator 19 über die Diode 20 direkt zur Null-Leitung 0. Im Verbindungspunkt 21 liegt demnach dann entsprechend dem Spannungsabfall an der Diode 20 eine sehr geringe negative Spannung.

Im Diagramm der Fig. 3 ist der zeitliche Verlauf der Spannung U im Verbindungspunkt gemäss den obigen Ausführungen dargestellt, wobei mit + und - die positive bzw. negative Halbperiode des Stroms im Entladungskreis bezeichnet sind. Mit dem Doppelpfeil ist angedeutet, dass die zeitliche Breite des positiven, den Kondensator 23 ladenden Impulses variabel ist, das heisst vom jeweiligen Ladezustand des Kondensators 23 abhängt. Beim erstmaligen Aufladen des Kondensators 23 nach dem Einschalten des Vorschaltgeräts kann sich der positive Impuls mehrmals über die ganze positive Halbperiode + des Stroms im Entladekreis erstrecken. Zufolge des Spannungsabfalls an der Diode 22 ist es zweckmässig, die Zener-Diode 33 mit einer etwas höheren Schaltspannung als der gewünschten Speisespannung am Kondensator 23 zu dimensionieren.

Da die beschriebene Gleichspannungs-Speiseschaltung nur dann funktionieren kann, wenn im Entladungskreis ein Strom fliesst, das heisst die Entladungslampe gezündet ist, ist es in an sich bekannter Weise erforderlich, beim Einschalten dees Vorschaltgeräts für eine erste, kurzzeitige Speisespannungserzeugung zu sorgen. Beim vorliegenden Vorschaltgerät sind hierfür die folgenden Massnahmen getroffen.

Von der Klemme 6, an welche gemäss Fig. 1 die vom Brückengleichrichter 2 gleichgerichtete Netzwechselspannung bzw. die Netzgleichspannung gelegt ist, ist eine Leitung über eine Diode 36 und einen ersten Widerstand 37 zum ersten Heizanschluss der im Entladungskreis zweite Elektrode der Entladungslampe 11 geführt. Vom zweiten Heizanschluss der Lampenelektrode führt die Leitung über einen weiteren Widerstand 38 zu einem Kondensator 39, welcher mit der Null-Leitung 0 verbunden ist.

Zwischen dem Widerstand 38 und dem Kondensator 39 ist an diese Leitung ein elektronischer Schalter angeschlossen, der einen mit einem Strombegrenzungswiderstand 40 versehenen Thyristor 41, eine zwischen die genannte Leitung und die Steuerelektrode des Thyristors 41 geschaltete Zener-Diode 42 sowie zwischen der Steuerelektrode und der Kathode des Thyristors 41 die Parallelschaltung 43 eines Widerstands und eines Kondensators enthält. Die Kathode des Thyristors 41 und die Parallelschaltung 43 sind an die Speiseleitung + der Gleichspannungs-Speiseschaltung 13 angeschlossen.

Beim Eimschalten des Vorschaltgeräts durch Anlegen der Netzwechselspannung oder Netzgleichspannung an den Brückengleichrichter 2 lädt die nun sofort an der Klemme 6 vorliegende Gleichspannung den Kondensator 39 über die Widerstände 37 und 38 auf. Sobald die Spannung am Kondensator 39 die Schaltspannung der Zener-Diode 42 erreicht, leitet diese, so dass die Steuerelektrode des Thyristors 41 eine positive Spannung erhält und der Thyristor 41 zündet. Der Kondensator 39 entlädt sich über den leitenden Thyristor 41 auf den Kondensator 23, so dass an der Speiseklemme 14 eine positive Spannung erscheint, welche die Steuerschaltung 8 und den Hochsetzsteller speist. Dadurch werden die elektronischen Schaltungsteile der Steuerschaltung 8 und des Hochsetzstellers 3 aktiv, was zur Zündung der Entladungslampe 11 und zu einem normalen Betriebszustand führt. Der Kondensator 39 und die Zenerdiode 42 sind hierbei so dimensioniert, dass die Ladung des Kondensators ausreicht, um die Steuerschaltung 8 und den Hochsetzsteller 3 bis zum Zünden der Entladungslampe 11 ausreichend zu speisen. Ein Absinken der Spannung an der Zener-Diode 42 und damit ihre Sperrung sind dabei ohne Belang, da der Thyristor zufolge seines sehr geringen Haltestromes nur löschen kann, wenn die Speisung über den Widerstand 38 ausfällt, das heisst, wenn das Vorschaltgerät abgeschaltet wird oder die Entladungslampe 11 entfernt wird bzw. einen Defekt erleidet. Bezüglich des letzteren Umstands kann deshalb eine defekte oder unbefriedigend brennende Entladungslampe bei eingeschaltetem Vorschaltgerät ersetzt werden, wobei nach dem Einsetzen der neuen Entladungslampe der beschriebene anfängliche Vorgang der Erzeugung der Speise-Gleichspannung mit dem Vorteil des temporären automatischen Ausschaltens der Steuerschaltung 8 und des Hochsetzstellers 3 und damit des Wechselrichters ebenfalls automatisch wieder abläuft.

In Fig. 2 ist eine weitere Hilfsschaltung des vorliegenden Vorschaltgeräts dargestellt, nämlich eine Abschaltanordnung bei Auftreten einer Ueberspannung im Entladungskreis. Der Ausgang eines Operationsverstärkers 44 liegt an der Verbindungsklemme 16 und damit, wie bereits erwähnt, an einem Abschaltanschluss der in der Steuerschaltung 8 enthaltenen integrierten Schaltung. Der negative Eingang - des Operationsverstärkers 44 ist mit einem Spannungsteiler 45, 46 verbunden, der zwischen der Speisespannung des Wechselrichters 4 (Klemme 7) und der Null-Leitung 0 angeordnet ist. Der positive Eingang + des Operationsverstärkers 44 steht mit dem Anschluss der Drossel 17 an die eine Elektrode der Entladungslampe 11 in Verbindung, und zwar über einen ersten Vorwiderstand 47, einen Kondensator 48, eine Gleichrichterschaltung 49 und einen zweiten Vorwiderstand 50. Ferner sind der positive Eingang + und der Ausgang des Operationsverstärkers 44 über einen Widerstand 51 miteinander verbunden, der einerseits als Rückkopplung zwecks schnellen Schalten des Operationsverstärkers 44 und andererseits, wie noch erläutert, als Verbindung für den durch die Widerstände 47, 50 gebildeten Spannungsteiler.

Die Dimensionierung der Spannungsteiler 45, 46 und 47, 50, 51 ist derart vorgenommen, dass im normalen Betriebszustand des Vorschaltgeräts die Spannung am negativen Eingang - des Operationsverstärkers 44 höher ist als am positiven Eingang +. Dann befindet sich der Ausgang des Operationsverstärkers 44 praktisch auf dem Null-Potential der Null-Leitung 0, was, wie erwähnt, den Spannungsteiler 47, 50, 51 definiert. An der Klemme 16 und damit am Abschaltanschluss der integrierten Schaltung der Steuerschaltung 8 liegt also auch das Null-Potential, was die integrierte Schaltung unbeeinflusst, also wirksam belässt.

Wenn nun im Entladungskreis eine unerwünschte Ueberspannung auftritt, steigt die Spannung am positiven Eingang + des Operationsverstärkers 44 und wird höher als die feste Spannung am negativen Eingang -. Dadurch wird der Ausgang des Operationsverstärkers 44 praktisch offen, so dass nun an der Klemme 16 bzw. am Abschaltanschluss der integrierten Schaltung eine positive Spannung liegt, welche die integrierte Schaltung und damit die Steuerschaltung 8 abschaltet. In der Folge kommt die Steuerung des Wechselrichters 4 zum Stillstand, die Entladungslampe 11 löscht und die Gleichspannungs-Speiseschaltung 13 wird inaktiv. Um den Betriebszustand wiederherzustellen, muss demnach das Vorschaltgerät neu an das Netz angeschaltet werden. Liegt die Ursache der Ueberspannung immer noch vor, erfolgt sofort eine erneute Abschaltung.

Die beschriebene Abschaltanordnung ist in gleicher Weise wirksam, wenn die Speisespannung des Wechselrichters 4 (Klemme 7) sinkt, ohne dass die Spannung nach der Drossel 17 entsprechend sinkt. Ein solcher Störfall dürfte zwar wohl eher selten sein, könnte jedoch durch einen anormalen Betriebszustand hervorgerufen werden. Auch dann ist die Spannung am negativen Eingang - des Operationsverstärkers 44 kleiner als diejenige am positiven Eingang +, so dass in der Folge die Steuerschaltung 8 abgeschaltet wird.

Statt des Operationsverstärkers 44 kann unter Vornahme entsprechender Schaltungsänderungen auch ein Komparator oder eine Transistorschaltung verwendet werden. Auch der Thyristor 41 kann durch eine Transistorschaltung mit den gleichen Funktionen ersetzt werden. Dagegen ist ein allenfalls nahegelegter Ersatz der beiden Transistoren 29, 30 durch einen Thyristor nicht gangbar, da dieses Schaltelement beim Erreichen der durch die Zener-Diode 33 festgelegten Ladespannung für den Kondensator 23 nicht löschen würde.

Das erfindungsgemässe elektronische Vorschaltgerät ermöglicht demnach eine sicheren, mühelosen und praktisch alle Eventualitäten berücksichtigenden Betrieb der Entladungslampe bei relativ geringem Aufwand an Bauteilen. Zudem sind elektrische Verluste und damit eine übermässige Wärmeerzeugung minimalisiert.

## Patentansprüche

1. Elektronisches Vorschaltgerät für eine Niederdruck-Gasentladungslampe, mit einem an eine Gleichstromquelle (3) angeschlossenen Wechselrichter (4), der die Entladungslampe (11) über eine in Reihe zur Entladungslampe (11) geschaltete Drossel (17), einen ersten, parallel zur Entladungslampe (11) geschalteten Kondensator (18) und einen zweiten, in Reihe zur Parallelschaltung der Entladungslampe (11) und des ersten Kondensators (18) geschalteten zweiten Kondensator (19) speist, wobei zur Steuerung des Wechselrichters (4) eine mit einer Gleichspannungs-Speiseschaltung (13) versehene Steuerschaltung (8) vorhanden ist, dadurch gekennzeichnet, dass in Reihe zum zweiten Kondensator (19) ein Stromerfassungselement (20) geschaltet ist, an welches ein elektronischer Spannungsschwellenschalter (24, 25) mit parallel zum Stromerfassungselement (20) liegender Schaltstrecke (24) sowie ein Speicherkondensator (23) zur Speicherung einer Speisegleichspannung (+) für die Steuerschaltung (8) angeschlossen sind.

2. Vorschaltgerät nach Anspruch 1, dadurch gekennzeichnet, dass als Stromerfassungselement in Reihe zum zweiten Kondensator (19) eine mit einer Null-Leitung (0) verbundene Diode (20) geschaltet ist, deren Sperrichtung für einen positiven Strom vom zweiten Kondensator (19) zur Null-Leitung (0) verläuft, und dass zwischen den Spannungsschwellenschalter (24, 25) und dem Speicherkondensator (23) eine in Richtung zu diesem leitende weitere Diode (22) geschaltet ist.

3. Vorschaltgerät nach Anspruch 2, dadurch gekennzeichnet, dass der Spannungsschwellenschalter (24, 25) eine Zener-Diode (33) und ein durch einen Stromfluss der Zener-Diode (33) einschaltbares Halbleiterglied (29, 30) enthält.

4. Vorschaltgerät nach Anspruch 3, dadurch gekennzeichnet, dass das Halbleiterglied einen npn-Transistor (29) und einen pnp-Transistor (30) enthält, bei welchen jeweils die Basis des einen Transistors mit dem Kollektor des anderen Transistors verbunden ist, wobei die Basen der Transistoren (29, 30) über je einen Widerstand (31, 32) mit der Null-Leitung (0) bzw. mit der in Reihe zum zweiten Kondensator (19) geschalteten Diode (20) verbunden sind, und dass die Zener-Diode (33) zwischen der in Reihe zum zweiten Kondensator (19) geschalteten Diode (20) und der Basis des npn-Transistors (29) angeordnet ist.

5. Vorschaltgerät nach einem der Ansprüche 1 bis 4, dadurch gekennzeichnet, dass die Gleichstromquelle für den Wechselrichter einen über eine Gleichrichteranordnung (2) an ein Wechsel- oder Gleichstromnetz anschliessbaren elektronischen Hochsetzsteller (3) enthält, und dass die Speisespannung (+) am Speicherkondensator (23) zusätzlich einer im Hochsetzsteller (3) enthaltenen Halbleiterschaltung zugeführt ist.

6. Vorschaltgerät nach einem der Ansprüche 1 bis 4, dadurch gekennzeichnet, dass die Gleichstromquelle für den Wechselrichter (4) einen über eine Gleichrichteranordnung (2) an ein Wechsel- oder Gleichspannungsnetz anschliessbaren elektronischen Hochsetzsteller (3) enthält, und dass der den Hochsetzsteller (3) speisende Ausgang (6) der Gleichrichteranordnung (2) über eine mindestens einen Widerstand (37, 38) enthaltende Leitung an einen elektronischen Schalter (41) angeschlossen ist, welcher mit dem Speicherkondensator (23) verbunden ist, um beim Einschalten des Vorschaltgeräts eine anfängliche Speisegleichspannung (+) mindestens für die Steuerschaltung (8) zu erzeugen.

7. Vorschaltgerät nach Anspruch 6, dadurch gekennzeichnet, dass der elektronische Schalter einen mit der Leitung des Ausgangs (6) der Gleichrichteranordnung (2) und dem Speicherkondensator (23) verbundenen Thyristor (41) enthält, dessen Steuerelektrode über eine Zener-Diode (42) mit der genannten Leitung verbunden ist, an welche ein weiterer, mit der Null-Leitung (0) verbundener Speicherkondensator angeschlossen ist.

8. Vorschaltgerät nach Anspruch 6 oder 7, dadurch gekennzeichnet, dass die Leitung des Ausgangs (6) der Gleichrichteranordnung (2) in Reihe zur einen Heizelektrode der Entladungslampe (11) geführt ist.

9. Vorschaltgerät nach einem der Ansprüche 1 bis 8, dadurch gekennzeichnet, dass eine Vergleichsschaltung (44) zum Vergleich der zwischen der Drossel (17) und der Entladungslampe (11) vorliegenden Spannung mit der von der Gleichstromquelle (3) an den Wechselrichter (4) abgegeben Spannung vorhanden ist, und dass der Ausgang der Vergleichsschaltung (44) mit der Steuerschaltung (8) verbunden ist, um die Steuerschaltung (8) abzuschalten, wenn zwischen der Drossel (17) und der Entladungslampe (11) eine Ueberspannung vorliegt.

10. Vorschaltgerät nach Anspruch 9, dadurch gekennzeichnet, dass die Vergleichsschaltung ein Operationsverstärker (44) oder ein Komparator ist, an dessen ersten Eingang (+) über einen Spannungsteiler (47, 50, 51) und eine Gleichrichteranordnung (49) eine Teilspannung der zwischen der Drossel (17) und der Entladungslampe (11) vorliegenden Spannung gelegt ist, und an dessen zweiten Eingang (-) über einen weiteren Spannungsteiler (45, 46) eine Teilspannung der von der Gleichstromquelle (3) an den Wechselrichter (4) abgegebenen Spannung gelegt ist.

## Claims

1. Electronic ballast for a low-pressure gas discharge lamp, having, connected to a DC source (3), an inverter (4) which supplies the discharge lamp (11) via an inductor (17) connected in series with the discharge lamp (11), a first capacitor (18), connected in parallel with the discharge lamp (11), and a second capacitor (19), connected in series with the parallel circuit consisting of the discharge lamp (11) and the first capacitor (18), a control circuit (8) provided with a DC voltage supply circuit (13) being present for controlling the inverter (4), characterized in that a current-detection element (20) is connected in series with the second capacitor (19) and has an electronic voltage-threshold switch (24, 25) with a contact gap (24) lying in parallel with the current-detection element (20), as well as a storage capacitor (23) for storing a supply DC voltage (+) for the control circuit (8), connected to it.

2. Ballast according to Claim 1, characterized in that a diode (20) connected to a neutral line (0) is connected, as the current-detection element, in series with the second capacitor (19) such that its reverseballast direction for a positive current runs from the second capacitor (19) to the neutral line (0), and in that a further diode (22) is connected between the voltage-threshold switch (24, 25) and the storage capacitor (23) such that it is forward-biased towards the latter.

3. Ballast according to Claim 2, characterized in that the voltage-threshold switch (24, 25) contains a Zener diode (33) and a semiconductor element (29, 30) which can be switched on by a current flow in the Zener diode (23).

4. Ballast according to Claim 3, characterized in that the semiconductor element contains an npn transistor (29) and a pnp transistor (30), in which in each case the base of one transistor is connected to the collector of the other transistor, the bases of the transistors (29, 30) each being connected via a resistor (31, 32), respectively to the neutral line (0) and to the diode (20) connected in series with the second capacitor (19), and in that the Zener diode (33) is arranged between the diode (20), which is connected in series with the second capacitor (19), and the base of the npn transistor (29).

5. Ballast according to one of Claims 1 to 4, characterized in that the DC source for the inverter contains an electronic step-up converter (3) which is connectable via a rectifier arrangement (2) to an AC or DC network, and in that the supply voltage (+) across the storage capacitor (23) is additionally fed to a semiconductor circuit contained in the step-up converter (3).

6. Ballast according to one of Claims 1 to 4, characterized in that the DC source for the inverter (4) contains an electronic step-up converter (3) which is connectable via a rectifier arrangement (2) to an AC or DC voltage network, and in that that output (6) of the rectifier arrangement (2) which supplies the step-up converter (3) is connected, via a line containing at least one resistor (37, 38), to an electronic switch (41) which is connected to the storage capacitor (23) in order to produce an initial supply DC voltage (+) at least for the control circuit (8), when the ballast is switched on.

7. Ballast according to Claim 6, characterized in that the electronic switch contains a thyristor (41), connected to the line of the output (6) of the rectifier arrangement (2) and to the storage capacitor (23), whose control electrode is connected via a Zener diode (42) to the said line, to which a further storage capacitor, connected to the neutral line (0), is connected.

8. Ballast according to Claim 6 or 7, characterized in that the line of the output (6) of the rectifier arrangement (2) is routed in series with a heating electrode of the discharge lamp (11).

9. Ballast according to one of Claims 1 to 8, characterized in that there is a comparison circuit (44) for comparing the voltage existing between the inductor (17) and the discharge lamp (11) with the voltage delivered by the DC source (3) to the inverter (4), and in that the output of the comparison circuit (44) is connected to the control circuit (8) in order to switch off the control circuit (8) when there is an overvoltage between the inductor (17) and the discharge lamp (11).

10. Ballast according to Claim 9, characterized in that the comparison circuit is an operational amplifier (44) or a comparator whose first input (+) has a fractional voltage of the voltage existing between the inductor (17) and the discharge lamp (11) applied to it via a voltage divider (47, 50, 51) and a rectifier arrangement (49), and whose second input (-) has a fractional voltage of the voltage delivered by the DC source (3) to the inverter (4) applied to it via a further voltage divider (45, 46).

## Revendications

1. Ballast électronique pour une lampe à décharge gazeuse à basse pression, comprenant un onduleur (4) relié à une alimentation en courant continu (3), pour alimenter la lampe à décharge (11) par un montage en série sur la lampe à décharge (11), d'une bobine (17), d'un premier condensateur (18) en parallèle sur la lampe à décharge (11) et d'un second condensateur (19) en série sur le montage en parallèle de la lampe à décharge (11) et du premier condensateur (18), la commande de l'onduleur (4) étant assurée par un circuit de commande (8) muni d'un circuit d'alimentation en tension continue (13),
caractérisé en ce qu'
un élément de détection d'intensité (20) est monté en série sur le second condensateur (19), et sur cet élément détecteur, sont branchés un commutateur à tension de seuil (24, 25) électronique dont le chemin de commutation (24) est en parallèle à l'élément de détection d'intensité (20) ainsi qu'un condensateur accumulateur (23) pour stocker une tension continue d'alimentation (+) pour le circuit de commande (8).

2. Ballast selon la revendication 1,
caractérisé en ce que
l'élément de détection de l'intensité en série sur le second condensateur (19) est une diode (20) reliée à la ligne de masse (0), dont le sens de blocage pour un courant positif va du second condensateur (19) à la ligne de masse (0) et entre le commutateur à seuil de tension (24, 25) et le condensateur accumulateur (23), se trouve une autre diode (22) conductrice dans cette direction.

3. Ballast selon la revendication 2,
caractérisé en ce que
le commutateur à seuil de tension (24, 25) comporte une diode Zener (33) et un élément semi-conducteur (29, 30) commuté par un passage de courant dans la diode Zener (33).

4. Ballast selon la revendication 3,
caractérisé en ce que
l'élément semi-conducteur comprend un transistor npn (29) et un transistor pnp (30), et chaque fois la base d'un transistor est reliée au collecteur de l'autre transistor, les bases des transistors (29, 30) étant reliées par une résistance respective (31, 32) à la ligne de masse (0) ou à la diode (20) en série par rapport au second condensateur (19) et la diode Zener (33) est montée entre la diode (20) en série sur le second condensateur (19) et la base du transistor npn (29).

5. Ballast selon l'une des revendications 1 à 4,
caractérisé en ce que
l'alimentation en courant continu de l'onduleur comporte un dispositif redresseur (2) et un élévateur électronique (3) pour être branchés sur un réseau alternatif ou continu et la tension d'alimentation (+) du condensateur d'alimentation (23) est en outre appliquée à un circuit semi-conducteur prévu dans l'élévateur (3).

6. Ballast selon l'une des revendications 1 à 4,
caractérisé en ce que
l'alimentation en courant continu de l'onduleur (4) comporte un élévateur électronique (3) branché par l'intermédiaire d'un dispositif redresseur (2) sur un réseau alternatif ou continu et en ce que la sortie (6) du redresseur (2) qui alimente l'élévateur (3) est reliée par une ligne comportant au moins une résistance (37, 38) à un commutateur électronique (41) lui-même relié au condensateur accumulateur (23), pour générer lors du branchement du ballast, une tension d'alimentation initiale (+) au moins pour le circuit de commande (8).

7. Ballast selon la revendication 6,
caractérisé en ce que
le commutateur électronique comporte un thyristor (41) relié à la ligne de la sortie (6) du redresseur (2) et au condensateur accumulateur (23), l'électrode de commande de ce thyristor étant reliée par une diode Zener (42) à la ligne, à laquelle est raccordé un autre condensateur accumulateur lui-même relié à la ligne de masse (0).

8. Ballast selon la revendication 6 ou 7,
caractérisé en ce que
la ligne de la sortie (6) du redresseur (2) est reliée en série à une électrode de chauffage de la lampe à décharge (11).

9. Ballast selon l'une quelconque des revendications 1 à 8,
caractérisé par
un comparateur (44) comparant la tension entre la bobine (17) et la lampe à décharge (11) à la tension fournie par l'alimentation en courant continu (3) à l'onduleur (4) et la sortie du comparateur (44) est reliée au circuit de commande (8) pour couper le circuit de commande (8), lorsqu'il y a une surtension entre la bobine (17) et la lampe à décharge (11).

10. Ballast selon la revendication 9,
caractérisé en ce que
le circuit de comparaison est un amplificateur opérationnel (44) ou un comparateur, dont une première entrée (+) reçoit par un diviseur de tension (47, 50, 51) et un montage redresseur (49), une fraction de la tension existant entre la bobine d'étranglement (17) et la lampe à décharge (11) et sa seconde entrée (-) reçoit par l'intermédiaire d'un autre diviseur de tension (45, 46), une fraction de la tension transmise par l'alimentation en courant continu (3) à l'onduleur (4).
